# EUROPEAN PATENT APPLICATION

(11) **EP 1 714 997 A1**
(43) Date of publication of application: **25.10.2006**
(21) Application number: 06075892.7
(22) Date of filing: 14.04.2006
(51) Int. Cl.: C08J 5/18, C08K 3/00, C08K 5/01, C08L 23/18

(54) **Composition of acoustic insulating and vibration dampening material**

(30) Priority: 22.04.2005 IT MI20050727
(71) Applicant: Map S.p.A., 24046 Osio Sotto (BG) (IT)
(72) Inventor: Sciola, Antonio c/o MAP S.p.A., 24046 Osio Sotto (BG) (IT)
(74) Representative: Riccardi, Sergio

(57) **Abstract**

A composition of acoustic insulating and viscouselastic vibration dampening material is described, constituted by an organic component based on plastic polymers and by an inorganic component based on mineral fillers dry blended and extruded in order to obtain raw material for moulding an end product in the form of sheets, rolls or slabs. A light weight and high performance acoustic insulating and dampening material is in this way obtained, which is not only non-toxic, uninflammable, odorless and simply recyclable but mouldable and workable so that it is suitable for every kind and shape of surfaces.

## Description

This invention concerns a composition of acoustic insulating and vibration dampening material, particularly suitable for use on handling systems and more generally on transport systems, such as streetcars, buses, trains, ships and boats, plants and machines, partition walls and' equipped walls for communities, air conditioning plants and ventilation channels.

Acoustic comfort is becoming more and more important target in design of transport systems either land vehicles for public and private people transport or big and medium dimension ships, plants and materials for civil and industrial environments. Reduction of sound pressure level, otherwise referred to as noise abatement, can be obtained either by weight increasing or by use of specific materials with high insulating power values.

In subjective sense, "noise" is defined as every undesirable and undesired sound phenomenon which disturbs auditive organs. Its control and reduction constitutes one of the new and most meaningful parameters of quality in transport system design. Sound waves produce air perturbations spreading along the three directions of the space and decreasing their own strength when the distance from sound source increases. High noise levels lead to irritation, stress, communication troubles and health problems such as hearing decrease.

It is universally known that every member, either mechanic or electric, on a transport system produces noise that is conveyed in the near zones by air and structures. A sound wave, hitting a wall or a partition, induces mechanic vibrations on the structure, the vibrating wall subsequently irradiating sound energy. Most of the sound energy is reflected back to the environment, whilst the remaining energy normally is being dissipated as friction loss of the system structure.

A characteristic property of the sound is to be efficiently reflected back by heavy surfaces. In other words, the higher weight (mass) is, the more energy is reflected back. For example, acoustic insulating power of an aluminium slab 3 mm thick, at 500 Hz, is 23 dB, whilst that of a steel slab, with same thickness at the same frequency, is 30 dB. In practice, acoustic insulating power improvement of a structure has been obtained by adding lead sheets (thin layer) inserted between soundproofing materials. Lead is a material with some good characteristics. It is malleable, laminable, melting at relatively low temperature (327.4°C). However, it also has bad characteristics that make it not very suitable to be handled by a man, if not just dangerous. Actually, all the lead compounds are poisonous. Workers handling metallic lead or all its compounds are subject to accumulation and chronic poisoning also known as saturnism. To avoid such risks of intoxication, since a long time fair preventive measures have been taken and made binding by law such as hyperventilation of production sites, smoke intakes, use of masks, sheltering gloves and overalls, and showers at the end of working shift. However, the most efficient prevention, obviously, is, not only on a production level but also on a user level, the reduction of the contact between man and material as well as the noticeable reduction of its use. An alternative material with respect to lead for use as acoustic insulating and/or soundproofing is PVC or its derivatives. It is a low cost material and very mouldable, but it has also the same toxicity problems, especially during production, with respect of lead, and it is not so easy to be disposed off at the end of lifecycle. Further, in case of fire, PVC exhales toxic and corrosive smokes (carbon monoxide and carbon dioxide) with very high opacity. For these reasons, some large automotive, electronic, cosmetic and packaging firms are trying to restrict its use.

The main object of this invention is, therefore, to provide a novel composition of acoustic insulating and vibration dampening viscouselastic material which is able to overcome troubles with above-mentioned materials.

More particularly, an object of this invention is to provide a compound of acoustic insulating and vibration dampening material with a double advantage of getting higher acoustic abatement values (soundproofing) than those that can be obtained by using lead slabs and/or PVC plates, decreasing very much, at the same time, the weight.

Another object of this invention is to provide a composition of acoustic insulating and vibration dampening material without toxicity problems during production and use steps, uninflammable, odorless and simply recyclable, being in this way workable and handled in every work site.

A further object of this invention is to provide a composition of acoustic insulating and vibration dampening material that, in view of its elastic properties, can be easily shaped and worked normally or by normal cutting blades, for its own easy and fast application on every kind and shape of surface.

According to this invention, the composition of acoustic insulating and vibration dampening material, that hereinafter will be simply identified with its trade name MAPFLEX allotted by the applicant, is a viscouselastic material constituted by plastic polymers with mineral fillers. It is in the form of rolls or sheets and it can be finished on the surface with non-woven fabric to increase strength and simplify its application on disconnected surfaces, with fiber glass mats, with aluminum films and to be coupled with soundproofing fabrics and with different kinds of synthetic resins.

There are a lot of fields for MAPFLEX use and they go from industrial vehicles and to general machines and plants, rail vehicles and streetcars, buses and industrial bodyworks, naval constructions and ship yards, ventilation channels, barriers against noise, materials and plants for equipped panels and walls for communities and many others.

MAPFLEX is constituted by a polymeric and organic non polymeric component composed of plastic polymers based on EPDM (ethylene-propylene-diene rubbers) and EVA (ethylene vinyl acetate) and other organic additives and by a mineral component composed of different mineral fillers such as inorganic compounds of metals of Group II and III of the Periodic Table of the Elements, in particular aluminum, barium, zinc and magnesium. The amount of the organic component is about 15-25% by weight and that of the mineral component is about 85-75% by weight in respect of total weight of the material, whose specific weight is about 2 Kg/m² for each millimeter of thickness.

MAPFLEX is a non toxic and odorless material and it burns with a low flame propagation, emits a very small smokes quantity and it is recyclable. It acts efficiently either as sound proofing or as vibration dampening material and it can be worked and handled with safety in every kind of work environment. Being a elastic material, it can be easily moulded and applied on surfaces of any shape. MAPFLEX can be applied on different kinds of surfaces such as steel, aluminum, glass-reinforced plastic, plastic and compounded materials, and hot applied, even without adhesives, on other materials to make technical composites.

The formulation of a particularly preferred embodiment of MAPFLEX is hereinafter disclosed as a merely explanatory example, either about the single ingredients of the two organic and mineral compounds or about their weight ratios.

**Table 1. MAPFLEX formulation**

| **Ingredients** | | **Quantity** |
|---|---|---|
| Polymeric and organic non polymeric component | | |
| | • EVA copolymer with 64-68% of VA, with high MFI | 13,00% |
| | • Paraffinic heavy oil, yellow | 3,60% |
| | • Medium-low molecular weight polyisobutylene, rubber | 2,40% |
| **Total organic component** | | **19,00%** |

| Mineral component | | |
|---|---|---|
| | • Alumina trihydrate, milled | 41,50% |
| | • Milled baritine (technical barium sulfate, titer ≥ 90%) | 36,00% |
| | • Hydrated zinc borate, corresponding to the empirical formula | 3,00% |
| | 2ZnO 3B₂O₃.3.5H₂O | |
| | • Magnesium hydroxide, powder | 0,50% |
| **Total mineral component** | | **81,00%** |
| **Total** | | **100,00%** |

The preparation of the exemplificative composition in Table 1 is obtained by carrying out the following operations.

The elements weighed according to the quantities in the previous Table 1 are mixed with care in a slow blender for some minutes. The products sold in the form of bales, such as polyisobutylene rubbers, must be crumbled into little granules. A co-rotating twin screw extruder, equipped with a gravimetric feeder and degassing device to remove volatile substance, is fed with the achieved dry blend. The extrusion process occurs at 170°C set temperature in the feeding zone, and 190°C in the remaining zones with 8-10 Kg/h laboratory output at 150 RPM and about 2500-4000 Kg/h at working rate.

The extruded product is cooled by rollers and has a yield rate of about 85% of useful product based on the weight of initial dry blend.

By the extrusion process good looking sheets and rolls without any laminations or considerable filler segregation are obtained.

In order to show the superior qualities and performances of MAPFLEX in the acoustic laboratory of the applicant different tests have been carried out characterizing at the acoustic level the material either as soundproofing either or viscouselastic vibration dampening means.

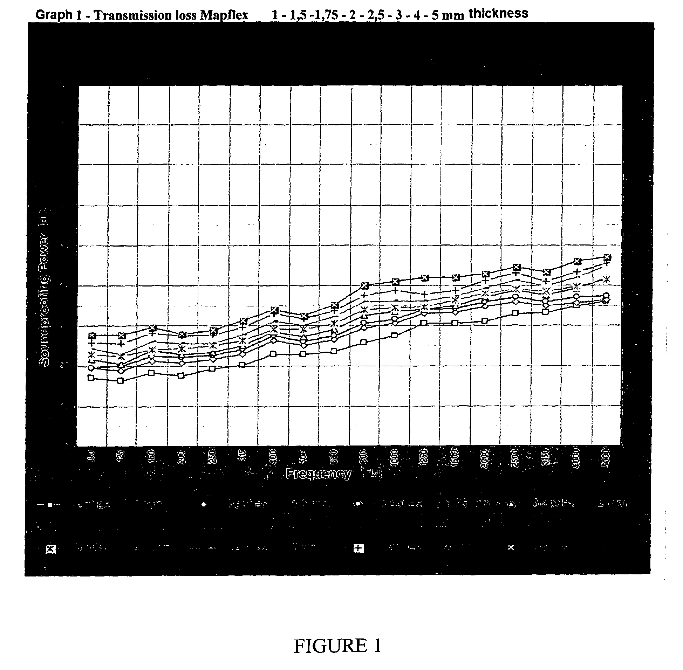

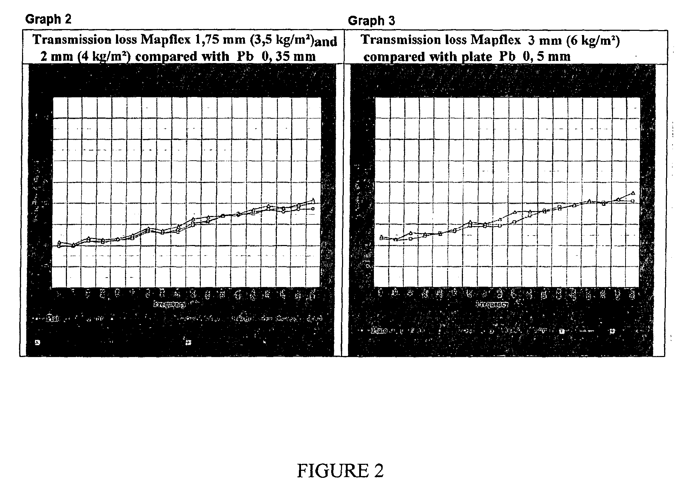

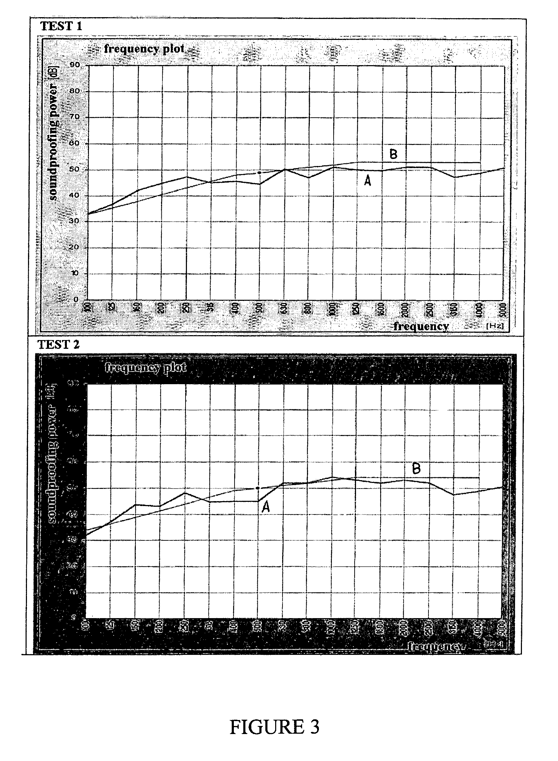

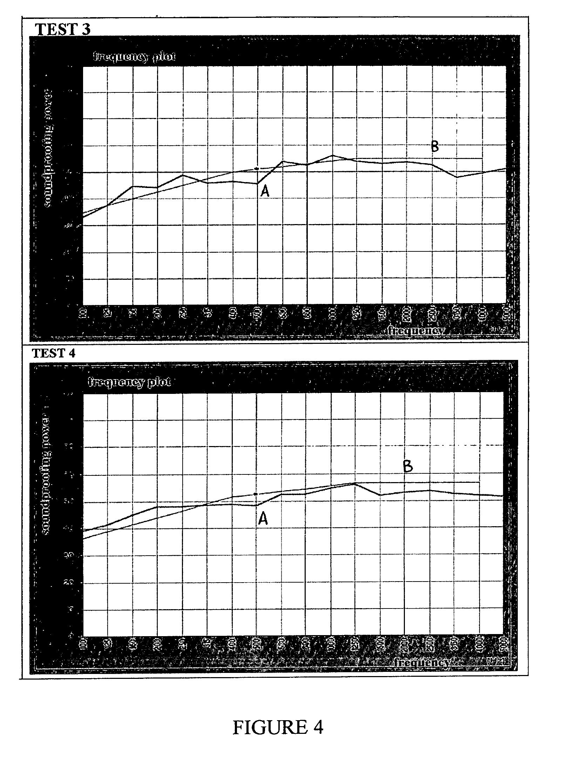

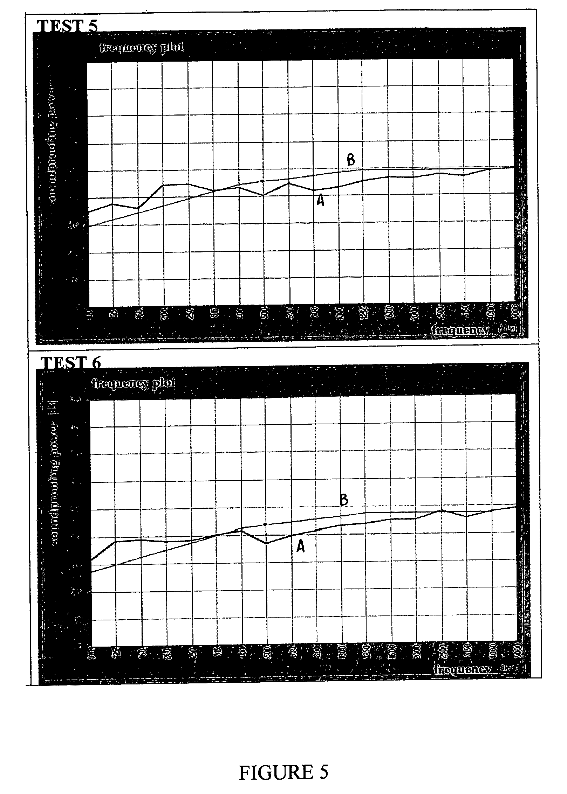

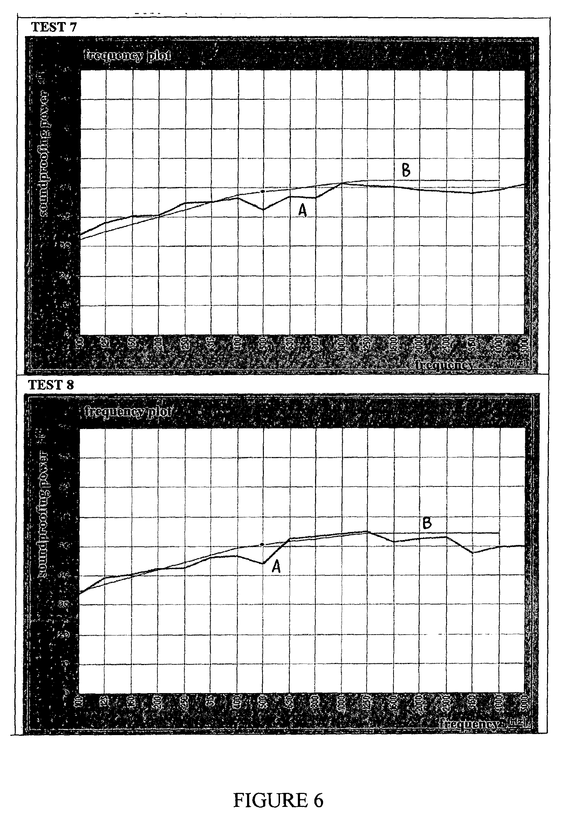

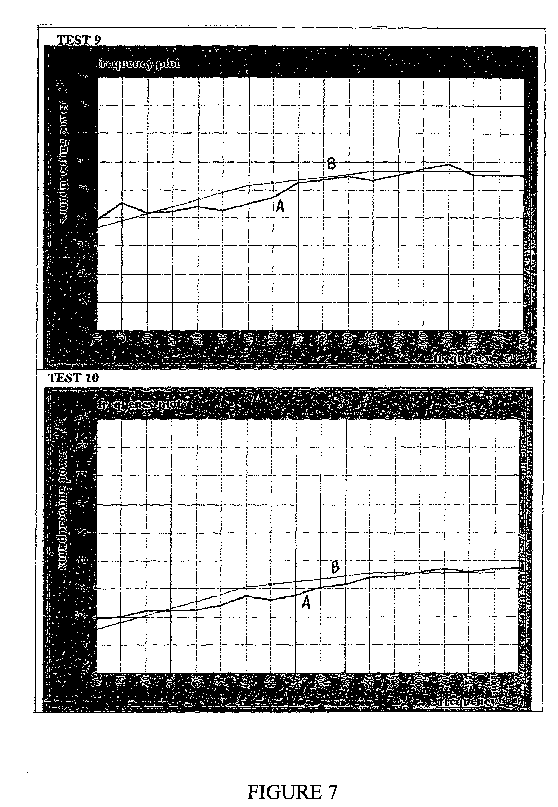

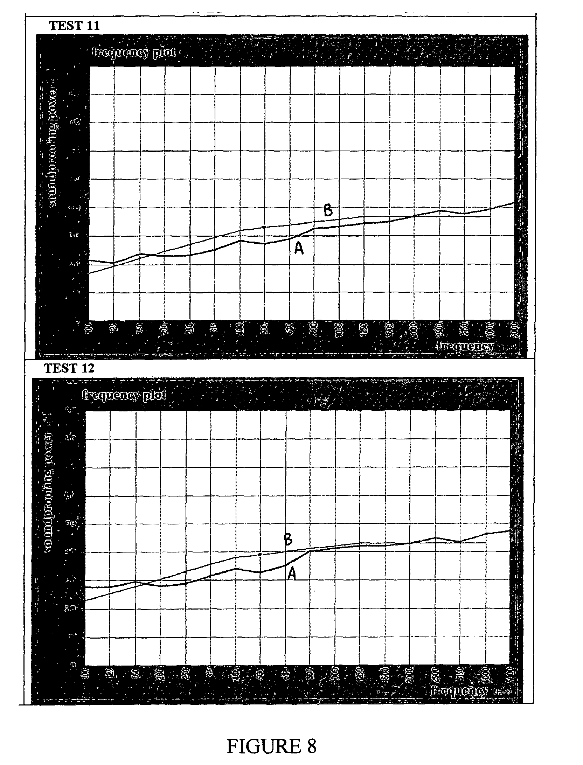

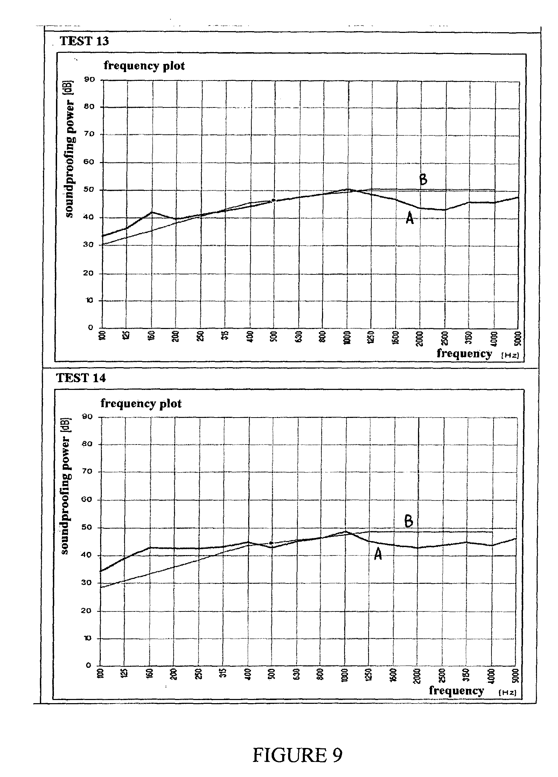

Insulating tests on MAPFLEX have been carried out in Graph 1 of the attached Figure 1, whilst in Graph 2 and 3 of the attached Figure 2 those in comparison with commonly used lead slabs 0,35 and 0,5 mm thick.

In addition insulating tests have been executed in comparison with other materials commonly used, for example in naval field.

Further several data of lab test regarding flame behavior, toxicity and smokes release according to the most qualified norms will be shown with so much brilliant results that it can be considered for all purposes the replacement of lead as acoustic insulating material in very many above mentioned trade field.

These sound abatement tests have been executed fixing, on a support slab 6mm thick, different kind of naval panels in order to:
- Compare soundproofing performance of MAPFLEX versus lead
- Estimate the real gain of weight for each m²
- Purpose alternative light-weight solutions with respect of traditional insulating systems (with lead slab between two mineral wool layers).

Fourteen tests have been executed in total and the graphs of their own results are shown in the attached sheets of drawing. On each graph, curves A represent insulating power of material or tested solution, whilst curves B indicate the S.T.C. (Sound Transmission Class) according to ISO 717 norm.

### Test 1

- Iron plate, thickness 6 mm
- Rock wool, thickness 50 mm, specific weight 100 Kg/m³
- Lead slab, thickness 0,5 mm
- Rock wool, thickness 30 mm, specific weight 30 Kg/m³
Panel weight: 11,6 Kg/m²
S.T.C. 49 dB

### Test 2

As in the previous test changing lead slab 0,5 mm thick with MAPFLEX sheet 1,75 mm thick, weight 3,5 Kg/m².
Panel weight: 9,3 Kg/m²
S.T.C. 50 dB

### Test 3

As in the previous test changing lead slab 0,5 mm thick with MAPFLEX sheet 2 mm thick, weight 4 Kg/m².
Panel weight: 9,8 Kg/m²
S.T.C. 51 dB

### Test 4

As in the previous test changing lead slab 0,5 mm thick with MAPFLEX sheet 5 mm thick, weight 10 Kg/m².
Panel weight: 15,8 Kg/m²
S.T.C. 52,5 dB

### Test 5

MAPFLEX 2 mm thick, directly anchored on the iron plate 6 mm thick with rock wool layer 60 mm thick, 50 Kg/m³
Panel weight: 7 Kg/m²
S.T.C. 43,5 dB

### Test 6

MAPFLEX 2 mm thick, directly anchored on the iron plate 6 mm thick with rock wool layer 100 mm thick, 50 Kg/m³
Panel weight: 9 Kg/m²
S.T.C. 45,5 dB

### Test 7

MAPFLEX 2 mm thick, directly anchored on the rock wool plate 100 Kg/m³ weight and 50 mm thick, glass wool 30 Kg/m³ and 30 mm thick.
Panel weight: 9,8 Kg/m²
S.T.C. 48,5 dB

### Test 8

MAPFLEX 2 mm thick bridge-like glued; anchored on top rock wool 50 Kg/m³ and 60 mm thick.
Panel weight: 7 Kg/m².
S.T.C. 50,5 dB.

### Test 9

MAPFLEX 2 mm thick bridge-like glued; anchored on top rock wool 100 Kg/m³ and 50 mm thick.
Panel weight: 15 Kg/m².
S.T.C. 52,5 dB.

### Test 10

MAPFLEX 1,75 mm thick naked.
Panel weight: 3,5 Kg/m².
S.T.C. 31,5 dB.

### Test 11

MAPFLEX 2 mm thick naked.
Panel weight: 4 Kg/m².
S.T.C. 33 dB.

### Test 12

MAPFLEX 5 mm thick naked.
Panel weight: 10 Kg/m².
S.T.C. 39 dB.

### Test 13

Iron plate 6 mm thick naked.
Panel weight: 46,6 Kg/m².
S.T.C. 46,5 dB.

### Test 14

Iron plate 6 mm thick reinforced by beams and hooks.
Panel weight: 63,8 Kg/m².
S.T.C. 44,5 dB.

Further all acoustic insulating data (S.T.C.), on the whole, recorded in semi anechoic and reverberation chamber of the applicant are compared with the most frequently used standard in acoustic insulating naval applications.
Test 1, with 11,6 Kg/m² and 49 dB sound abatement value, is the benchmark regarding the most used solution in naval insulation: a lead plate between a rock wool layer and a glass layer, anchored (ten hooks welded on each m²) on a steel (Fe) slab 6 mm thick, reinforced by beams.
Test 2, solution being equal, regards the replacement only of the lead plate 0,5 mm thick with MAPFLEX 1,75 mm thick (3,5 Kg/m²). S.T.C. gain of soundproofing power equal to 1 dB has been recorded, with a whole value equal to 50 dB and a weight reduction equal to 2,2 Kg/m² of covered surface.
Test 3 offers again the same solution of test 2, with only difference in MAPFLEX thickness, from 1,75 mm to 2 mm (4 Kg/m²). By adding only 0,5 Kg/m² an insulating level of 51 dB is gained, 1 dB higher than the one in test 2 and even 2 dB higher than the one in test 1 (with lead plate 0,5 mm thick) saving 1,7 Kg/m² of weight, again in comparison with test 1.
Test 4, instead, regarding use of MAPFLEX 0,5 mm thick, shows how any other weight increase (from 3,5-4 to 10 Kg/m²) in this chosen solution produces really an insulating increase equal to 1,5 dB, but with a considerable not proportional weight increase. It is actually known that mass increase by itself, in presence of per se very heavy structures such as the naval ones, normally does not produce considerable results in relation to weight. Weight can be justified, perhaps for few zones, by need of reaching a target in any case.
Test 5, with MAPFLEX layer 5 mm thick directly anchored on iron plate, making the most of its viscouselastic properties, points out again a good abatement, with S.T.C. value equal to 43,5 dB. This reduction is worth considering the weight and thickness used, only 7 Kg/m² in 50 mm (from 2 to 4,6 Kg/m² less than tests 1, 2, 3 and 4), with reduction of application time and obviously lower raw materials costs.
Test 6 improves abatement performances recorded in test 5 till 2 dB (S.T.C. equal to 45,5 dB), but with 2 Kg/m² weight increase (9 Kg/m² in total) and 40 mm thickness increase (100 mm in total). In this case, a 2,6 Kg/m² weight reduction must be appreciated, in relation to the lead plate solution (test 1), and also an application time of the soundproofing material used.
Test 7, instead, points out that solution with MAPFLEX in contact can also give the same results as those in test 1, by using lead plate 0,5 mm thick, and even better than those achieved with MAPFLEX between two mineral wool layer (test 3). This solution makes the most of the viscouselastic properties of 2 mm MAPFLEX (4 Kg/m²) and, with respect of test 5 and 6, it is different because of the soundproofing treatment. Two different kind of mineral wool, actually, have been used sequentially, a rock type 100 Kg/m³ heavy and mm thick, and a glass type 30 g/m³ heavy and 30 mm thick. Phonometric check found an S.T.C. level equal to 50,5 dB, basically the same as the one in test 3 with interposed MAPFLEX 2 mm thick and 1,5 dB higher than the known solution (test 1) with lead plate 0,5 mm thick. Even in this case, weight reduction with respect to test 1 (as in test 3) is equal to 1,7 Kg/m².
Data found in test 8, with 2 mm MAPFLEX bridge-like glued making the most of its viscouselastic properties with a 60 mm rock wool layer 50 Kg/m² heavy top anchored, are particularly interesting. With a only 7 Kg/m² panel, actually, a just 50 dB S.T.C. has been measured, again the same as that of panel in test 3 and 7, but with a 2,8 Kg/m² less and just 4,6 Kg/m² less than in the solution with 0,5 mm lead plate on test 1. Labour increase due to bridge glueing 2 mm MAPFLEX can be made up, partly o totally, by installation time reduction of only one rock wool layer on top and by the cost reduction of the soundproofing raw material. Acoustic result found can also be ascribed to the greater insulating continuity.
Test 9 offers the same solution of test 8, with replacement of 2 mm thickness MAPFLEX (4 Kg/m²) with a 5 mm thickness (10 Kg/m²), and with rock wool layer 100 Kg/m³ heavy and 50 mm thick top anchored. S.T.C. insulating increase is equal to 2 dB (52,2 dB S.T.C.) with respect of test 8 and equal to 1,5 dB with respect of test 3, corresponding to 8 and 5,2 Kg/m² weight increase. Also in this case, advantage of dB gain has to be valued together with penalization of weight increase, but in some cases, especially for small zones or without enough, space (thickness), this one can be an acceptable condition, when not needed.
Tests 10, 11 and 12 show dampening values for MAPFLEX used alone, with thickness equal to 1,75, 2 and 5 mm respectively. Test 10 regards insulating power of MAPFLEX 1,75 mm thick, with S.T.C. value equal to 31,5 dB and 3,5 Kg/m² heavy. Test 11 shows, instead, insulating properties of 2 mm MAPFLEX with S.T.C. value equal to 33 dB and 4 Kg/m² heavy. As it can be seen, by adding only 0,5 Kg/m² the abatement level increases for 2,5 dB. Test 12 points out "transmission loss" of MAPFLEX 5 mm thick and 10 Kg/m² heavy. S.T.C. value is equal to 39 dB with 6 dB and 6 Kg/m² rise in comparison with example of 2 mm thickness.
   Finally, in order to better consider the values found in each above mentioned solution, two tests on steel plate (Fe) have been taken as it is (test 13), completed by beams and 10 hooks for each square meter to fix panels (test 14).
Test 13 regards iron plate alone, 6 mm thick and 46,6 Kg/m² heavy. S.T.C. value found is equal to 46,5 dB. Test 14 regards, instead, iron plate 6 mm thick, stiffeners welded (T-shaped beams) 5 mm thick and ten hooks for each square meter insulating fixing, for a total weight equal to 63,8 Kg/m². S.T.C. found is equal to 44 dB. Comparison between S.T.C. level of these two tests points out that hook stiffeners serve as elements or reflecting "aerials", which make "transmission loss" just of naked plate 6 mm thick 2 dB worse.

On the whole, results of these tests suggest to use the bridge-like glueing method for MAPFLEX (test 8) with these possible effects:
- Reduction of reflections caused by stiffeners and hooks because, in order to correct actions of these elements by insulating top installed, it should need to insulate all the structural stiffeners, with subsequent increase of weight and costs;
- Reduction of acoustic energy irradiated by the vibrating plate (Fe) due to the dampening action induced by viscouselastic properties of MAPFLEX.

The direct effect on acoustic lab tests leads to the following general remarks about MAPFLEX use (test 2, 3, 7 and 8) instead of traditional lead plate 0,5 mm thick (test 1) arranged between two mineral soundproofing layers:
- Lead replacement with acoustically equivalent for equal or better acoustic insulation
- Reduction of polluting materials (lead)
- Possible mass application at sight (not allowed for lead)
- Reduction of acoustic bridges caused by lacerations
- during lead laying (that on MAPFLEX being plastic material tend to close by themselves)
- Weight reduction
- Thickness reduction (if provided)
- In case of top application with hooks (where provided), considerable reduction of installation costs
- In case of bridge application by glueing (where provided), easier and more comfortable installation, even these to be ascribed to a cost reduction
- Reduction of global costs, due to reduction of thickness or quantity of soundproofing raw material used.

Therefore MAPFLEX offers efficiently as a substitute of lead as insulating material. Further, its use enables reduction of installation time and linked costs, but also reduction in using technical soundproofing wools of mineral nature, material just considered, if not polluting, surely irritating and undesired in many kind of industrial fields. MAPFLEX, further, allows a more easy laying than lead rolls, besides permitting gain in weight, in general allows reduction of application time. In particular, in case of bridge-like assembly, whole application time becomes even shorter.

Furthermore, MAPFLEX can be manufactured in different weight, thickness, finishing and with different acoustic and dampening performances. It is a non toxic material, recyclable and it can be easily applied on different surfaces such as steel, aluminium, glass-reinforced plastic and composites.

MAPFLEX solutions executed in test 2, 3, 7 and 8, thanks to acoustic insulation found and weight reduction achieved in comparison with traditional solution based on lead plate, might modify future applications of acoustic insulating and dampening materials.

From the previous detailed description one can see that the composition according to present invention, completely achieves the intended goals and reaches a remarkable technical progress, with great economic, technical and environmental advantages in comparison with nowadays used materials in the same fields of application. It must be further pointed out that a detailed description had been provided with an illustrative but not restrictive embodiment which can undergo different changes, variants, additions and/or substitutions of elements, without falling outside the scope of protection of the invention, as defined in appended claims.

## Claims

1. A composition of acoustic insulating and vibration viscouselastic dampening material, **characterized by** a structure based on an organic component of plastic polymers and on an inorganic component of mineral fillers, dry blended and extruded in order to obtain a raw material for moulding an end product in the form of sheets, rolls and slabs.

2. The composition according to claim 1, **characterized in that** said organic component is constituted by plastic polymers based on EPDM and EVA, with organic additives, and said inorganic component is constituted by minerals such as inorganic compounds based on metals of Groups II and III of the Periodic Table of the Elements, in particular aluminium, barium, zinc, magnesium.

3. The composition according to claim 2, **characterized in that** the organic component ratio is about 15-25% of total weight, and the mineral component ratio is about 85-75% of total weight of the material.

4. The composition according to claim 3, **characterized by** the following specific formulation:
• EVA copolymer with 64-68% of VA, with
high MFI 13,00%
• Paraffinic heavy oil, yellow 3,60%
• Medium-low molecular weight
polyisobutylene, rubber 2,40%
Total organic non polymeric and polymeric
component 19,00%
Mineral component
• Alumina trihydrate, milled 41,50%
• Milled baritine (technical barium
sulfate, titer ≥ 90%) 36,00%
• Hydrated zinc borate, corresponding to
the empirical formula 3,00% 2ZnO 3B₂O₃.3.5H₂O
• Magnesium hydroxide, powder 0,50%
Total mineral component 81,00%

5. The composition according to one or more preceding claims, **characterized in that** it has a specific weight of about 2 Kg/m² for each mm of thickness.

6. The composition according to one or more preceding claims, **characterized in that** its surface is finished by non woven fabric, fiber glass mat, or aluminium film.

7. The composition according to one or more preceding claims, **characterized in that** it is coupled with soundproofing fabrics and with different kinds of synthetic resins.

8. The composition according to one or more preceding claims, **characterized in that** it is profilable on surfaces with different shapes made of aluminium, steel, glass-reinforced plastic, plastic materials and any other suitable material.

9. The composition according to one or more preceding claims, **characterized in that** it is hot applicable directly or by adhesives to other materials for making technical compounds.
